# EUROPÄISCHE PATENTSCHRIFT

(11) **EP 0 460 492 B1**
(45) Veröffentlichungstag und Bekanntmachung des Hinweises auf die Patenterteilung: **02.03.1994**
(21) Anmeldenummer: 91108622.1
(22) Anmeldetag: 28.05.1991
(51) Int. Cl.: A01D 34/66, F16H 57/02

(54) **Mähbalken**
Cutter bar
Barre de coupe

(30) Priorität: 01.06.1990 US 531606
(43) Veröffentlichungstag der Anmeldung: 11.12.1991
(73) Patentinhaber: DEERE & COMPANY, Moline, Illinois 61265 (US)
(72) Erfinder: Walters, James C., Ottumwa, Iowa 52501 (US); Richardson, Craig Allen, Ottumwa, Iowa 52501 (US); Verhulst, Michael Joseph, Ottumwa, Iowa 52501 (US)
(74) Vertreter: Feldmann, Bernhard

(56) Entgegenhaltungen:
- EP-A- 0 279 889
- WO-A-90/14754
- FR-A- 2 228 417
- US-A- 4 223 570
- US-A- 4 838 014
- US-A- 4 840 019

## Beschreibung

Die Erfindung betrifft einen Mähbalken mit mehreren Schneideinheiten, die über in Lagervorrichtungen drehbar aufgenommene Räder angetrieben werden, der in Modulbauweise ausgebildet ist und aus mehreren Gehäuseabschnitten mit jeweils einem Gehäuse besteht, das die Lagervorrichtung für das Rad enthält.

Die US-A-4 840 019 offenbart einen Mähbalken in Modulbauweise mit mehreren Gehäuseabschnitten, durch die sich eine Welle, auf die mehrere Kegelräder drehfest aufgesetzt sind, erstreckt. Jedes Kegelrad ist in dem dazugehörigen Gehäuseabschnitt über eine Lagervorrichtung drehbar aufgenommen. Zur Demontage eines der auf der Welle befestigten Kegelräder ist es trotz der Modulbauweise erforderlich, die Welle wenigstens teilweise, unter ungünstigen Bedingungen vollkommen zu entfernen. Zudem müssen zur Demontage eines Kegelrades der betreffende Gehäuseabschnitt und die dazugehörige Schneideinheit demontiert werden, weil das Kegelrad nicht aus dem Gehäuseabschnitt seitlich entfernt werden kann. Ein weiterer Nachteil besteht in der Verwendung von Kegelrädern, die stets eine einwandfreie axiale Positionierung erfordern.

Die FR-A-2.228.417 offenbart einen Mähbalken mit mehreren Schneideinheiten, die über Antriebsräder und umlenkende Räder in Drehung versetzt werden. Der Mähbalken enthält ein allen Schneideinheiten gemeinsames Gehäuse, das aus einer oberen und einer unteren Hälfte besteht, die im Bereich von Lagervorrichtungen miteinander verschraubt werden. Hierzu sind an jeder Hälfte innen- bzw. außenkonische Zapfen eingeschweißt, die den lichten Abstand im wesentlichen überbrücken. Die umlenkenden Räder wie auch die Wellen für die Schneideinheiten werden in die obere Hälfte eingesetzt und infolge der Montage der unteren Hälfte durch diese gesichert bzw. abgedeckt. Zum Auswechseln eines Rades oder einer Lagervorrichtung muß der Mähbalken auf seiner gesamten Länge getrennt werden, weil er nicht an irgendeiner Stelle seiner Länge trennbar ist und die Räder weder seitlich, noch nach oben oder unten herausgenommen werden können.

Die US-A-4,223,570 offenbart unter anderem eine Lagervorrichtung für ein Rad in einem Kraftfahrzeuggetriebe mit einem einsetzbaren Zapfen. Die Wände, in die die Öffnungen zur Aufnahme des Zapfens eingebracht sind, sind einstückig miteinander ausgebildet. Das Rad wird in den Spalt zwischen den Wänden eingeschoben und mittels des Zapfens gesichert.

Die US-A-4,838,014 zeigt einen Mähbalken einer Mähmaschine, in dessen Gehäuse mittels zweier ineinander passender Zapfen ein Umlenkrad über ein Lager drehbar aufgenommen wird. Die Zapfen liegen über Dichtungen aneinander und jeweils an dem Gehäuse dichtend an. Zum Festhalten des Innenrings des Lagers werden die angrenzenden Gehäusebereiche mittels einer Schraube über die beiden Zapfen auf den Innenring gepreßt.

Diese Vorrichtung ist nachteilig, weil an den mehreren Zapfenanlageflächen und bei dem Abstand zwischen den Wänden des Gehäuses sehr enge Toleranzen gewählt werden müssen. Zudem müssen die beiden Zapfen und das Gehäuse getrennt voneinander bearbeitet werden, was höhere Fertigungskosten hervorruft. Darüberhinaus sind zur Montage mindestens vier Teile zueinander zu positionieren, was ein hohes Maß an Geschicklichkeit erfordert. Schließlich sind drei Dichtungen erforderlich, die nicht nur kostenmäßig zu berücksichtigen sind, sondern dreifach die Möglichkeit einer Undichtigkeit eröffnen.

Bei einer Lagervorrichtung nach der US-A-4,426, 828 wird der Innenring über einen von zwei konzentrisch zueinander angeordneten Zapfen an einen Boden des Gehäuses angepreßt.

Auch bei dieser Ausführungsart sind wenigstens drei Dichtungen erforderlich, und es sind wiederum vier Teile miteinander in Fluchtung zu bringen, was sich angesichts dessen, daß unter herkömmlichen Umständen die Montage des einen Zapfens von unten her vorzunehmen ist, als schwierig erweisen kann.

Die FR-A1-2 247 153 zeigt einen Mähbalken mit einer Lagervorrichtung für zwei Räder, die über eine gegenüber den Zapfen wesentlich größere Welle miteinander verbunden sind und über vier Lager in dem Gehäuse gehalten werden. Diese Ausführung ist insgesamt sehr aufwendig und mit einem hohen Kostenaufwand verbunden.

Schließlich geht aus der FR-B-783,925 ein Mähbalken mit einer Lagervorrichtung hervor, bei der eine mit einem Antriebsrad drehfest verbundene Welle drehbar in dem Gehäuse gelagert ist, wobei die Welle in einem in dem Boden des Gehäuses integrierten Aufnehmer drehbar gehalten ist. Bei dieser Ausbildung ist die Welle drehbar, was nicht stets erforderlich ist.

Die der Erfindung zugrunde liegende Aufgabe wird darin gesehen, einen Mähbalken vorzuschlagen, bei dem das Rad mit seinem Lager auf einfache Weise in dem Gehäuse montiert werden kann und der mit einem geringen Fertigungsaufwand realisierbar ist.

Diese Aufgabe ist erfindungsgemäß durch die Merkmale des Patentanspruchs 1 gelöst worden, wobei in den weiteren Patentansprüchen Merkmale aufgeführt sind, die die Lösung in vorteilhafter Weise weiterentwickeln.

Auf diese Weise können der Aufnehmer und die Öffnung in einem Arbeitsgang auf einer Werkzeugmaschine bearbeitet werden; Fertigungsungenauigkeiten können hierdurch vermieden werden. Dadurch, daß der Aufnehmer mit dem Gehäuse einteilig ausgebildet ist, entsteht keine abzudichtende Fläche zwischen ihnen und eine Dichtung ist somit nicht erforderlich. Bei der Montage des Rades braucht nur noch der Zapfen durch die Öffnung und den Innenring des Lagers geschoben zu werden, was einfach auszuführen ist, weil zwischen dem Innenring und dem Außenumfang des Fußes eine relativ große Toleranz möglich ist, denn der Innenring wird reibschlüssig zwischen dem Kopf und dem Aufnehmer gehalten.

Insbesondere die genannte konzentrische Anordnung der Teile erlaubt es, die Lagervorrichtung mit geringen Fertigungskosten auf drehenden Werkzeugmaschinen herzustellen.

Wenn auch der Zapfen den Aufnehmer radial übergreifen und der Innenring an einer Schulter des Aufnehmers zur Anlage gebracht werden könnte, ist es fertigungstechnisch einfacher, wenn der Aufnehmer den Zapfen übergreift und der Innenring an einem dadurch entstehenden Steg zur Anlage gelangt.

Zwar könnte eine Abdichtung des Gehäuses im Bereich des Zapfens auch durch eine Dichtpaste oder Dichtflüssigkeit erreicht werden; diese sind jedoch bei einer Demontage schwierig zu entfernen. Es ist deshalb vorteilhaft, Vorkehrungen zu treffen, die den Einsatz von Flach- oder Rundschnurdichtungen zulassen, die an den entsprechenden Berührungsflächen angeordnet werden.

Da es sich bei dem Zapfen um einen Drehteil handelt, ist es sinnvoll, in seiner Umfangsfläche eine Nut zur Dichtungsaufnahme einzudrehen.

Angesichts des nur sehr begrenzt zur Verfügung stehenden Bauraums ist es von großem Vorteil, wenn eine Mähmaschine diese erfindungsgemäße Lagervorrichtung enthält.

In der Zeichnung ist ein nachfolgend näher beschriebenes Ausführungsbeispiel der Erfindung dargestellt.

Es zeigt:
- Fig. 1: ein Gehäuse mit einem Getriebe und erfindungsgemäß gelagerten Rädern, in Draufsicht,
- Fig. 2: einen Vertikalschnitt durch das Gehäuse entlang der Linie 2-2 und in Blickrichtung der dazugehörigen Pfeile in Figur 1 in vergrößerter Darstellung und
- Fig. 3: einen Teil des Getriebes in Draufsicht.

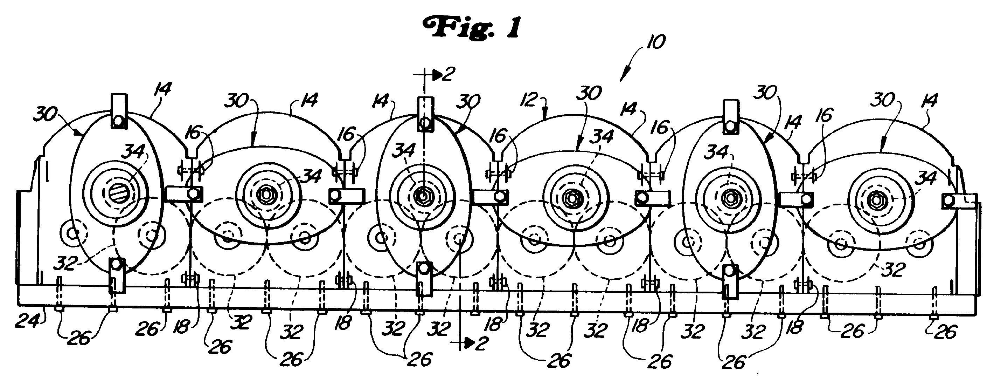

In Figur 1 ist ein Mähbalken 10 für einen Mäher mit drehenden Schneidelementen bzw. einen Scheibenmäher gezeigt, der ein Gehäuse 12 enthält, das sich aus einer Vielzahl von Modulen zusammensetzt, von denen jeder einen Gehäuseabschnitt 14 aufweist. Jeder Gehäuseabschnitt 14 trägt entgegengesetzte Enden, die durch ebene, sich längs erstreckende Endflächen begrenzt werden, die sicher und dicht an benachbarten Endflächen eines benachbarten Gehäuseabschnitts 14 mittels Schrauben 16 bzw. 18 angelegt sind. Linke und rechte Abschlußdeckel 20, 22 sind jeweils an den äußeren links bzw. rechts Gehäuseabschnitten 14 angebracht. Ein rohrförmiger Versteifungsbalken 24 von rechteckförmigem Querschnitt erstreckt sich längs des Mähbalkens 10 und ist mittels Schrauben 26 an entsprechende, ebene Flächen von rückwärtigen Wänden 28 der Gehäuseabschnitte 14 angeschraubt. Jeder der Gehäuseabschnitte 14 nimmt eine drehende Schneideinheit 30 an einer zentralen Stelle auf, die mittels eines in Hintereinander- und Parallelschaltung ausgebildeten Stirnradgetriebes angetrieben werden. Hierzu ist ein ununterbrochener Antriebsstrang von hintereinander angeordneten als Umlenkräder dienenden Rädern 32 und zu diesen parallel verlaufenden Antriebsrädern 34 für die Schneideinheiten 30 vorgesehen, wobei die Antriebsräder 34 mit ausgewählten Rädern 32 in Eingriff stehen, um eine gewünschte Drehrichtung zu erreichen.

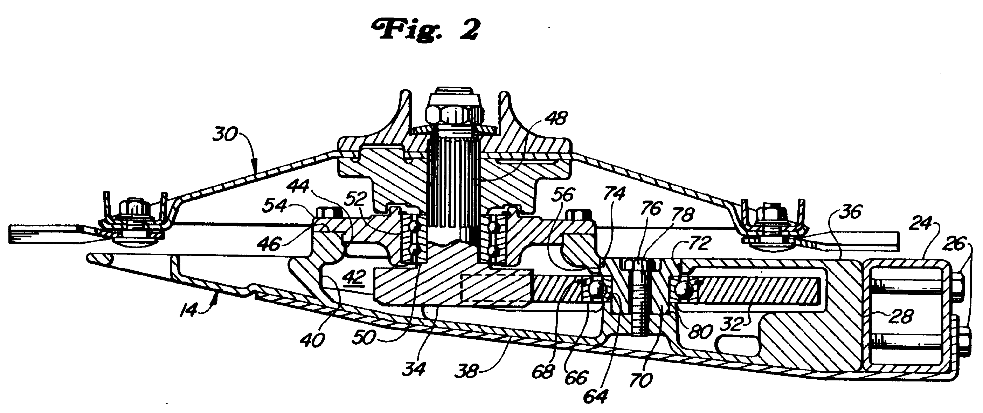

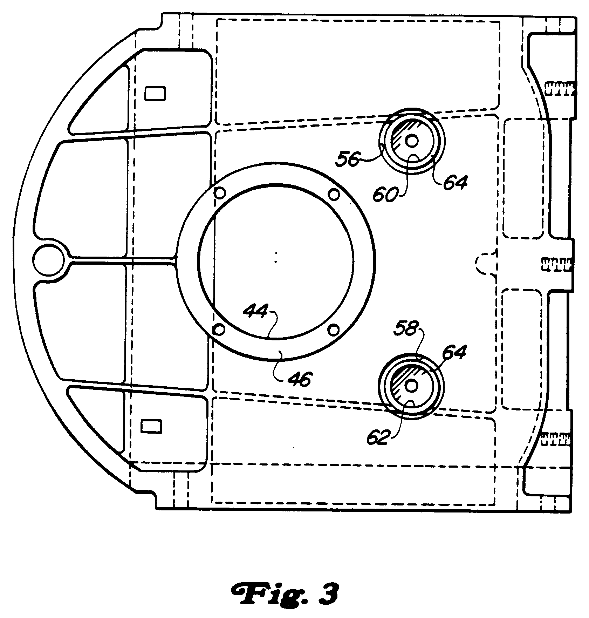

Mit Bezug auf die Figuren 2 und 3 ist zu erkennen, daß jeder Gehäuseabschnitt 14 im vertikalen Querschnitt mehr oder weniger eine Keilform aufweist und eine im wesentlichen horizontal verlaufende Decke 36 und einen Boden 38 enthält, der von der rückwärtigen Wand 28 zu einer vorderen Wand 40 nach vorne konvergierend verläuft, so daß eine Kammer 42 gebildet wird. Die Kammern 42 der nebeneinander gelegenen Gehäuseabschnitte 14 wirken derart zusammen, daß daraus das gesamte Gehäuse 12 des Mähbalkens 10 entsteht. In der Decke 36 ist eine mittig angeordnete Öffnung 44 enthalten, die in den vorderen Endbereich der Kammer 42 mündet und von einer nach oben gerichteten ringförmigen Montagefläche 46 eingefaßt ist. Jedes Antriebsrad 34 ist an einen unteren Endbereich einer Antriebsspindel 48 angeformt, die drehbar in einen Lagerzusammenbau 50 eingesetzt ist. Der Lagerzusammenbau 50 ist in einem Lagergehäuse 52 mit einem Ringflansch 54 gehalten, der lösbar mit der Montageoberfläche 46 verbindbar ist, wobei das Lagergehäuse 52, der Lagerzusammenbau 50 und die Antriebsspindel 48 die Öffnung 44 verschließen.

Die Gehäuseabschnitte 14 sind so konstruiert, daß in ihnen ein Paar der Räder 32 montiert werden kann, wobei jedoch für die äußeren Gehäuseabschnitte 14 links und rechts des Mähbalkens 10 jeweils nur ein Rad 32 vorgesehen ist. Im einzelnen enthält jeder Gehäuseabschnitt 14 eine rechte und eine linke kreisförmige Öffnung 56 und 58, die in der Decke 36 in gleichem Abstand zu und rückwärtig von der Öffnung 44 angeordnet sind. Auf der Innenseite des Bodens 38 des Gehäuseabschnitts 14 befindet sich in axialer Flucht mit den kreisförmigen Öffnungen 56 und 58 jeweils ein rechter und ein linker zylindrischer Aufnehmer 60 und 62, von denen jeder einen ringförmigen als Lagersitzfläche ausgebildeten Steg 64 trägt, der sich an seiner Oberseite befindet. Jedes der Räder 32 nimmt fest den Außenring eines als Kugellager ausgebildeten Lagers 66 in einer mittigen Bohrung auf und hält es in seiner Stellung mittels eines Sicherungsrings 68, der in zusammenpassenden Nuten in dem Rad 32 und in dem Außenring paßt. Jedes der Räder 32 ist in der Kammer 42 des bestimmten Gehäuseabschnitts 14 derart untergebracht, daß es mit dem Innenring des zugeordneten Lagers 66 auf dem Steg 64 des gewählten Aufnehmers 60, 62 aufsitzt. In dem Innenring des Lagers 66 und in einem Innenraum des Aufnehmers 60, 62 ist ein Zapfen 70 mit einem gegenüber seinem Fuß größeren Kopf 72 stramm aufgenommen, der eine nach unten weisende Oberfläche bildet, die an dem Innenring des Lagers 66 anliegt und bündig in der zugeordneten zylindrischen Wandung aufgenommen wird, die die Öffnung 56 bzw. 58 umgibt. Eine als O-Ring ausgebildete Dichtung 74, die eine Leckage von Schmiermittel aus der zugehörigen Öffnung 56, 58 verhindern soll, ist in einer Umfangsnut aufgenommen, die in die Mantelfläche des Kopfes 72 eingedreht ist. Ein Befestigungselement 76 erstreckt sich durch eine axial durch die Zapfen 70 verlaufende Bohrung 78 und ist in den Boden 38 des Gehäuseabschnitts 14 eingeschraubt, wobei der Innenring des Lagers 66 durch den Kopf 72 des Zapfens 70 fest gegen den gewählten Steg 64 gepreßt wird. Eine wiederum als O-Ring ausgebildete Dichtung 80 ist im Fußbereich des jeweiligen Aufnehmers 60, 62 vorgesehen, um eine Leckage aus der Kammer 42 auf dem Weg durch die Bohrung 78 zu vermeiden.

Es ist ersichtlich, daß durch die Erfindung eine wirksame und dennoch einfache Anordnung für die Montage eines Rades 32 in einem flüssigkeitsdichten Gehäuse 12 eines Mähbalkens 10 geschaffen worden ist, bei der pro Umkehrrad 32 nur zwei Dichtungen 74 und 80 benötigt werden, um einen Austritt des Schmiermittels aus dem Gehäuse 12 zu vermeiden.

## Patentansprüche

1. Mähbalken (10) mit mehreren Schneideinheiten (30), die über in Lagervorrichtungen drehbar aufgenommene Räder (32) angetrieben werden, der in Modulbauweise ausgebildet ist und aus mehreren Gehäuseabschnitten (14) mit jeweils einem Gehäuse (12) besteht, das die Lagervorrichtung für das Rad (32) enthält, dadurch gekennzeichnet, daß
a) das Gehäuse (12) jeweils an den Anschlußflächen des nächsten Gehäuseabschnitts (14) zum Einfügen eines Rades (32) offen ist,
b) daß jeweils eine Öffnung (56, 58) und ein Aufnehmer (60, 62), die konzentrisch zueinander angeordnet und Teil des Gehäuses (12) sind, vorgesehen sind,
c) daß jeweils ein Zapfen (70), der einen Kopf (72) und einen Fuß aufweist, wobei der Kopf (72) in der Öffnung (56, 58) und der Fuß gegenüber dem Aufnehmer (60, 62) jeweils dichtend zur Anlage bringbar sind, vorgesehen ist,
d) daß jeweils ein Lager (66), das einen Innenring und einen Außenring aufweist, wobei der Innenring auf dem Fuß des Zapfens (70) zwischen dem Kopf (72) und dem Aufnehmer (60, 62) und der Außenring in dem Rad (32) gehalten ist, vorgesehen ist, und
e) daß jeweils ein Befestigungselement (76), das sich durch den Zapfen (70) in den Aufnehmer (60, 62) erstreckt und dort arretierbar ist, vorgesehen ist.

2. Mähbalken nach Anspruch 1, in der der Zapfen (70), die Öffnung (56, 58), das Lager (66), der Aufnehmer (60, 62), das Rad (32) und das Befestigungselement (76) konzentrisch zueinander angeordnet sind.

3. Mähbalken nach Anspruch 1 oder 2, in der der Aufnehmer (60, 62) einen zylindrischen Steg (64) aufweist, der den Zapfen (70) formschlüssig aufnimmt und an dem das Lager (66) zur Anlage bringbar ist.

4. Mähbalken nach einem oder mehreren der vorherigen Ansprüche, in der im Bereich der Umfangsfläche des Kopfes (72) und des Fußes jeweils eine Dichtung (74, 80) vorgesehen ist.

5. Mähbalken nach Anspruch 4, wobei die Dichtungen (74, 80) in Nuten in dem Kopf (72) und in dem Fuß eingesetzt sind.

## Claims

1. A cutter bar (10) with a plurality of cutter units (30), which are driven by gears (32) rotatably received in bearing devices, the cutter bar being of modular construction and consisting of a plurality of housing sections (14), each with a housing (12) which contains the bearing device for the gear (32), characterized in that
a) the housing (12) is open in each case to the attachment surfaces of the next housing section (14) for introduction of a gear (32),
b) in each case an opening (56, 58) and a receiver (60, 62) are provided, being arranged concentric with one another and being parts of the housing (12),
c) in each case a pin (70) is provided, with a head (72) and a foot, wherein the head (72) can be brought into engagement with the opening (56, 58) and the foot can be brought into engagement opposite the receiver (60, 62), in each case in sealing manner,
d) in each case a bearing (66) is provided, having an inner ring and an outer ring, wherein the inner ring is retained on the foot of the pin (70) between the head (72) and the receiver (60, 62) and the outer ring is held in the gear (32), and
e) in each case a fixing element (76) is provided and extends through the pin (70) into the receiver (60, 62) and can be held there.

2. A cutter bar according to claim 1, in which the pin (70), the opening (56, 58), the bearing (66), the receiver (60, 62), the gear (32) and the fixing element (76) are arranged concentric to one another.

3. A cutter bar according to claim 1 or 2, in which the receiver (60, 62) has a cylindrical rib (64) in which the pin (70) mates and on which the bearing (66) can be brought into engagement.

4. A cutter bar according to one or more of the preceding claims, in which a seal (74, 80) is provided in the region of the peripheral surfaces of each of the head (72) and the foot.

5. A cutter bar according to claim 4, wherein the seals (74, 80) are fitted in grooves in the head (72) and in the foot.

## Revendications

1. Barre de coupe (10) avec plusieurs unités de coupe (30) qui sont entraînées au moyen de roues (32) reçues à rotation dans des ensembles de palier, la barre de coupe présentant une structure modulaire et étant constituée de plusieurs parties de carter (14) formant chaque fois un carter (12), qui contient l'ensemble de palier pour la roue (32), **caractérisée**
a) en ce que le carter (12) est chaque fois ouvert sur les faces de raccordement de la partie de carter (14) consécutive, afin d'insérer une roue (32),
b) en ce qu'il est chaque fois prévu une ouverture (56, 58) et un élément récepteur (60, 62), qui sont disposés de façon concentrique et font partie du carter (12),
c) en ce qu'il est chaque fois prévu un tourillon (70) présentant une tête (72) et une base, la tête (72) et la base pouvant être respectivement amenées en application étanche dans l'ouverture (56, 58) et en vis-à-vis de l'élément récepteur (60, 62),
d) en ce qu'il est chaque fois prévu un roulement (66) présentant une bague intérieure et une bague extérieure, la bague intérieure étant maintenue sur la base du tourillon (70), entre la tête (72) et l'élément récepteur (60, 62), et la bague extérieure étant maintenue dans la roue (32),
e) et en ce qu'il est chaque fois prévu un élément de fixation (76), qui s'étend à travers le tourillon (70) dans l'élément récepteur (60, 62) et peut y être bloqué.

2. Barre de coupe selon la revendication 1, **dans laquelle** le tourillon (70), l'ouverture (56, 58), le roulement (66), l'élément récepteur (60, 62), la roue (32) et l'élément de fixation (76) sont disposés de façon concentrique.

3. Barre de coupe selon la revendication 1 ou 2, **dans** **laquelle** l'élément récepteur (60, 62) présente un rebord cylindrique (64), qui reçoit en engagement positif le tourillon (70) et contre lequel le roulement (66) peut être amené en application.

4. Barre de coupe selon l'une quelconque des revendications précédentes, **dans laquelle** un joint d'étanchéité respectif (74, 80) est prévu dans la région de la face périphérique de la tête (72) et de la base.

5. Barre de coupe selon la revendication 4, **dans laquelle** les joints d'étanchéité (74, 80) sont insérés dans des rainures pratiquées dans la tête (72) et dans la base.
